# EUROPÄISCHE PATENTSCHRIFT

(11) **EP 3 534 435 B1**
(45) Veröffentlichungstag und Bekanntmachung des Hinweises auf die Patenterteilung: **01.04.2026**
(21) Anmeldenummer: 18159041.5
(22) Anmeldetag: 28.02.2018
(51) Int. Cl.: H01M 8/18, H01M 50/70

(54) **REDOX-FLUSSBATTERIE MIT WENIGSTENS EINER ZELLE SOWIE VERFAHREN ZUM BETREIBEN EINER REDOX-FLUSSBATTERIE**
REDOX FLOW BATTERY WITH AT LEAST ONE CELL AND METHOD FOR OPERATING A REDOX FLOW BATTERY
BATTERIE À FLUX REDOX À AU MOINS UNE CELLULE AINSI QUE PROCÉDÉ DE FONCTIONNEMENT D'UNE BATTERIE À FLUX REDOX

(43) Veröffentlichungstag der Anmeldung: 04.09.2019
(73) Patentinhaber: CMBlu Energy AG, 63755 Alzenau (DE)
(72) Erfinder: Fleck, Robert, 91325 Adelsdorf (DE); Schricker, Barbara, 91058 Erlangen (DE); Wolfschmidt, Holger, 91058 Erlangen (DE)
(74) Vertreter: Maiwald GmbH

(56) Entgegenhaltungen:
- WO-A1-2013/027076
- AT-A4- 501 902
- CN-U- 201 508 873
- US-A1- 2011 244 277

## Beschreibung

Die Erfindung betrifft eine Redox-Flussbatterie gemäß dem Oberbegriff des Patentanspruchs 1 sowie ein Verfahren zum Betreiben einer Redox-Flussbatterie gemäß dem Oberbegriff des Patentanspruchs 8

Eine Redox-Flussbatterie, welche auch als Flüssigbatterie, Nasszelle oder nach dem Englischen als Redox-Flow-Batterie bezeichnet wird, ist eine Ausführungsform eines Akkumulators. Die Redox-Flussbatterie kann zukünftig eine große Bedeutung bei der Speicherung elektrischer Energie aus regenerativen Energiequellen erlangen, da sie fluktuierende Energien wie Sonnen- und/oder Windenergie speichern und bei Bedarf wieder abgeben kann. Ein die Redox-Flussbatterie charakterisierendes Merkmal ist, dass die Speicherung der chemischen Energie nicht wie üblich in einem Feststoff, sondern in einem flüssigen Elektrolyten erfolgt. Dieser lagert in der Regel in zwei separaten Tanks und kann bei Bedarf in einer Zelle der Redox-Flussbatterie umgesetzt werden. In einem Inneren der Zelle befinden sich zwei Elektroden, eine Anode und eine Kathode. Eine, insbesondere ionenleitende, Membran trennt beziehungsweise unterteilt die Zelle in zwei Halbzellen, dabei ist jeweils eine Elektrode in jeweils einer der Halbzellen angeordnet.

An der Anode werden Elektronen zur Verfügung gestellt, welche die Kathode aufnimmt, wodurch ein Strom zwischen beiden Elektroden fließt. Aufgrund der jeweiligen Elektrodenreaktion entsteht zwischen den beiden Halbzellen ein Ladungsungleichgewicht, weshalb ein Ladungsaustausch durch die Membran stattzufinden hat. Diese Reaktion ist bei der Redox-Flussreaktion umkehrbar, sodass die Redox-Flussbatterie wieder aufgeladen werden kann. In der Regel umfasst solch eine Redox-Flussbatterie nicht nur eine Zelle, sondern es sind mehrere Zellen zu einem sogenannten Stack gestapelt, wodurch beispielsweise ein Vielfaches an Leistung erreicht werden kann.

Wünschenswert bei Redox-Flussbatterie ist ein möglichst konstanter Betrieb, bei welchem Verluste besonders gering gehalten werden können. Typische Verluste der Redox- Flussbatterie sind beispielsweise Verluste aufgrund von Diffusionsprozessen. Diese treten auf, wenn der verwendete Elektrolyt beispielweise an die und von der Dreiphasengrenze innerhalb einer Zelle beziehungsweise des Stacks der Redox- Flussbatterie gebracht beziehungsweise abtransportiert werden muss. Solche Diffusionsprozesse und die mit ihnen einhergehenden Verluste können insbesondere dominieren, wenn eine Chemie beziehungsweise Elektrolyte eingesetzt werden, welche eine besonders hohe Reaktionskinetik aufweisen, wie beispielsweise Polyoxometallate in POM-Redox-Flussbatterien.

Eine konventionelle Redox-Flussbatterie zeigt die US 8 808 897 B2, welche als Vanadium-Redox-Flow-Batterie ausgebildet ist und eine Protonenaustauschmembran, zwei Graphitpapiere, zwei Graphit-Filzeinheiten, zwei Plättchen, zwei Graphitplatten, zwei Metallplatten und eine Verriegelungsfixiervorrichtung aufweist.

Aufgabe der vorliegenden Erfindung ist es daher, eine Redox-Flussbatterie sowie ein Verfahren zum Betreiben einer Redox-Flussbatterie bereitzustellen, mittels welchen Verluste in einer Redox-Flussbatterie besonders gering gehalten werden können. Im Besonderen ist das Ziel die homogene Verteilung des Elektrolyten über die gesamte Elektrode zu gewährleisten Diese Aufgabe wird erfindungsgemäß durch eine Redox-Flussbatterie gemäß dem Patentanspruch 1 sowie ein Verfahren zum Betreiben einer Redox-Flussbatterie gemäß dem Patentanspruch 8 gelöst. Vorteile und vorteilhafte Ausgestaltungen der Erfindung sowie zweckmäßige Weiterbildungen sind in den übrigen Patentansprüchen angegeben.

Ein erster Aspekt der Erfindung betrifft eine Redox-Flussbatterie mit wenigstens einer Zelle, welche durch eine Membran in Halbzellen unterteilt ist, welche jeweils eine Elektrode umfasst. Die jeweilige Elektrode ist in einem von einem Elektrolyten durchströmbaren Innenraum der jeweiligen Halbzelle angeordnet. Der Elektrolyt ist mittels einer Pumpvorrichtung über einen Fluideingang in einem Strömungsfeld durch die Halbzelle zu einem Fluidausgang förderbar.

Damit Verluste besonders gering gehalten werden können, ist es erfindungsgemäß vorgesehen, dass durch eine Verwirbelungsvorrichtung die Strömung des Elektrolyten verwirbelbar ist beziehungsweise verwirbelt wird. Mit anderen Worten ist die Strömung des Elektrolyten durch die Verwirbelungsvorrichtung in zumindest einem, insbesondere der Verwirbelungsvorrichtung zugeordneten, Teilbereich turbulent und/oder pseudoturbulent. So kann die Strömung beispielweise im Strömungsfeld bei Abwesenheit der Verwirbelungsvorrichtung in der Regel laminar ausgebildet sein, die Verwirbelungsvorrichtung verändert diese laminare Strömung zumindest in einem Teilbereich in eine von der laminaren Strömung abweichenden Strömung, in welcher Verwirbelungen und/oder Querströmungen auftreten können. Unter dem Strömungsfeld ist ein Bereich im Innenraum der Halbzelle zu verstehen, durch welchen der Elektrolyt im Betrieb der Redox-Flussbatterie hindurchströmt beziehungsweise hindurchströmen kann. Dies kann ein Bereich sein, welcher an der Elektrode angeordnet ist oder die Elektrode zumindest teilweise beziehungsweise vollständig umfasst.

Das Strömungsfeld, im Englischen als Flow Field bezeichnet, kann so angeordnet sein, dass die Elektrode das Strömungsfeld vollständig umfasst, was Flow Through-Strömungsfeld genannt wird. Alternativ oder zusätzlich kann das Strömungsfelds derart zur Elektrode angeordnet sein, dass der Elektrolyt mittels eines sogenannten Flow-By-Strömungsfeldes an der Elektrode vorbei geleitet wird. Allgemein dient das Strömungsfeld dem Zuführen beziehungsweise Verteilen beziehungsweise Umverteilen des Elektrolyten in der Halbzelle, sodass die Elektrode besonders vorteilhaft angeströmt beziehungsweise durchströmt werden kann. Die Elektrode ist in der Regel aus einem porösen Material gebildet, welches eine besonders große innere Oberfläche für eine Reaktion aufweist, wobei in der Regel, insbesondere kohlenstoffbasierte, Vliese Verwendung finden.

Die Verwirbelungsvorrichtung kann derart ausgebildet sein, dass sie Verwirbelungen des Elektrolyten sowohl in der jeweiligen Zelle beziehungsweise Halbzelle verursachen kann, als auch innerhalb eines sogenannten Stacks, welcher ein Verbund mehrerer Zellen ist, sodass die Verwirbelung auch zwischen jeweiligen Zellen auftreten kann. Alternativ oder zusätzlich kann die Verwirbelung des Elektrolyten durch die erfindungsgemäße Verwirbelungsvorrichtung auch zwischen Stacks stattfinden beziehungsweise verursacht werden. Somit kann durch die erfindungsgemäße Verwirbelungsvorrichtung ein zumindest teilweise turbulenter Elektrolytfluss innerhalb der Zelle und/oder des Stacks verursacht beziehungsweise gefördert werden. Dadurch können Diffusionsverluste innerhalb der Redox-Flussbatterie, und insbesondere innerhalb der jeweiligen Zelle, besonders gering gehalten und somit die Leistungsdichte der wenigstens einen Zelle beziehungsweise des Stacks gesteigert werden. Unter dem Verwirbeln der Strömung des Elektrolyten durch die Verwirbelungsvorrichtung ist insbesondere zu verstehen, dass das Elektrolyt zumindest in einem Teilbereich der Redox-Flussbatterie bei seiner Förderung, insbesondere mittels der Pumpvorrichtung durch die Redox-Flussbatterie, an beziehungsweise in zumindest einem Teilbereich von einer sonst weitestgehend vorherrschenden laminaren Strömung unterschiedliches, insbesondere durchmischtes, Strömungsverhalten aufzeigt. Der wenigstens eine Teilbereich, an beziehungsweise in welchem solch eine Verwirbelung auftritt, kann als Verwirbelungszone bezeichnet werden.

Der Erfindung liegt die Erkenntnis zugrunde, dass bei laminarer beziehungsweise gleichmäßiger Strömung des Elektrolyten durch die Halbzelle beziehungsweise den Stack gegebenenfalls nur ein Bruchteil des umgepumpten beziehungsweise geförderten Elektrolyten umgesetzt werden kann. Das heißt, Ionen des Elektrolyten, welche für einen Stromfluss innerhalb der Zelle beziehungsweise der Redox-Flussbatterie genutzt werden können, sind derart im Elektrolyten verteilt, dass sie beispielsweise nicht vollständig an der jeweiligen Elektrode, also der Anode beziehungsweise Kathode, umgesetzt werden können. Das heißt, ein Teil des Elektrolyten strömt durch die jeweilige Halbzelle, ohne dass die in ihm gelösten Ionen möglichst vollständig zur Stromerzeugung verwendet werden. Dies kann zumindest als ein Teil der Diffusionsverluste angesehen werden. Um diese und weitere diffusionsbedingte Verluste besonders gering halten zu können, sollte der Elektrolyt in der Redox-Flussbatterie besonders verwirbelt werden, das heißt die Redox-Flussbatterie sollte mit einer hohen Elektrolyt-Umwälzrate betrieben werden. Eine hohe Umwälzrate könnte jedoch dazu führen, dass Strömungsverluste in der Batterie zunehmen würden.

Jedoch können in der erfindungsgemäßen Redox-Flussbatterie durch die Verwirbelungsvorrichtung zusätzliche Strömungsverluste vermieden werden, da die wenigstens eine durch die Verwirbelungsvorrichtung gebildete Verwirbelungszone beziehungsweise Turbulenzzone beispielsweise gezielt im Strömungsfeld eingesetzt werden kann.

In konventionellen Redox-Flussbatterien beträgt die Reynolds-Zahl, welche ein Verhältnis von Trägheitskräften zu Zugkräften innerhalb einer fluidischen Strömung beschreibt, typischerweise einen Wert kleiner 1.000. Der Wert der Reynolds-Zahl innerhalb der Elektrode, insbesondere falls diese aus Filz ausgebildet ist, weist typischerweise Werte kleiner 10 auf. Durch die erfindungsgemäße Verwirbelungsvorrichtung kann die Reynolds-Zahl zumindest in Teilbereichen der Zelle beziehungsweise des Stacks Werte größer 2.300 aufweisen.

Ein weiterer Vorteil der erfindungsgemäßen Redox-Flussbatterie ist die Möglichkeit, reaktivere Elektrolyten als beispielsweise konventionelle Elektrolyten auf Vanadium-Basis, zu verwenden. Da bei reaktiveren Chemikalien die Prozesse der Redox-Reaktion schneller ablaufen können als bei trägen, konventionellen Elektrolyten, können Diffusionsprozesse bei reaktiveren Chemikalien stärker ausgeprägt sein. Daher kann bei konventionellen Flussbatterien auf die erfindungsgemäße Verwirbelungseinrichtung verzichtet werden. Jedoch kann gerade durch die Verwendung der Verwirbelungseinrichtung ein völlig neues Feld an Elektrolyten für die Redox-Flussbatterie erschlossen werden, womit beispielsweise besonders hohe Leistungsdichten realisierbar sind.

In vorteilhafter Ausgestaltung der Erfindung umfasst die Verwirbelungsvorrichtung wenigstens einen Formkörper, welcher als Rampe und/oder Körper mit wenigstens einer Kante ausgebildet ist. Mit anderen Worten weist die Verwirbelungsvorrichtung einen Formkörper auf, welcher insbesondere derart in dem Strom beziehungsweise der Strömung des Elektrolyten angeordnet ist, sodass der Elektrolyt beim Umströmen des Formkörpers verwirbelt wird. Das heißt, der Formkörper weist eine, insbesondere äußere, Form auf, welche dazu geeignet ist, den Elektrolytstrom derart zu beeinflussen, dass beispielsweise eine laminare Strömung, welche auf den Formkörper trifft, beim an dem Formkörper Vorbeiströmen insbesondere in einem an den Formkörper angrenzenden Bereich eine Verwirbelungszone des Elektrolyten auftritt. Dies kann beispielsweise durch die Ausbildung des Formkörpers als Rampe realisiert werden, wobei die Rampe sich, insbesondere entlang der Strömungsrichtung, verjüngt beziehungsweise verbreitert. Das heißt, sie ändert ihre Querschnittsfläche, insbesondere entlang der Strömungsrichtung. Durch die Änderung der Querschnittsfläche tritt eine Druckänderung in dem Elektrolyten auf, welche zu der Verwirbelung führen kann. Je nach Orientierung der Rampe im Strom kann eine asymmetrische beziehungsweise eine symmetrische Änderung der Querschnittsfläche vorteilhaft sein. Zusätzlich oder alternativ kann die Verwirbelung mittels eines Körpers, welcher wenigstens eine Kante aufweist, initiiert werden. Dabei kann der kantige Körper beispielsweise zumindest eine Fläche aufweisen, welche als Dreieck, Viereck oder gleichmäßiger oder ungleichmäßiges Polygon ausgebildet ist. Beim Umströmen des kantigen Körpers kommt es insbesondere an der Kante zu Druckunterschieden des Elektrolyten, sodass insbesondere dort ein Zentrum ausgebildet ist, an welchem die Verwirbelung entstehen kann. Durch die Verwendung des wenigstens einen Formkörpers kann auf besonders einfache Weise eine Verwirbelungsvorrichtung gebildet werden, mittels welcher die Strömung des Elektrolyten verwirbelbar ist. Dadurch kann die Verwirbelungsvorrichtung beispielsweise besonders wartungsarm und/oder besonders kostengünstig betrieben beziehungsweise bereitgestellt werden. In besonders vorteilhafter Weise sind mehrere Formkörper, insbesondere periodisch, entlang des Strömungsfelds angeordnet, wodurch beispielsweise der homogenisierende Effekt der Verwirbelungsvorrichtung besonders vorteilhaft verstärkt werden kann. Ist der Formkörper innerhalb der Elektrode ausgebildet, kann dies beispielsweise auch dergestalt sein, dass der Formkörper mittels der Änderung der Dichte des Elektrodenwerkstoffs ausgebildet ist. So kann beispielsweise ein Bereich der Elektrode, welcher die Form des Formkörpers aufweist, innerhalb dieses Bereichs eine höhere oder geringere Dichte aufweisen.

In vorteilhafter Ausgestaltung der Erfindung ist der wenigstens eine Formkörper in Strömungsrichtung des Elektrolyten nach dem Fluideingang und/oder vor dem Fluidausgang und/oder innerhalb des Strömungsfeldes angeordnet. Mit anderen Worten wird der wenigstens eine Formkörper derart, insbesondere im Innenraum, der jeweiligen Halbzelle platziert, dass der Elektrolyt, welcher, insbesondere durch die Pumpvorrichtung gefördert, aus dem Fluidausgang in die Halbzelle einströmt, auf den wenigstens einen Formkörper trifft beziehungsweise diesen an- und/oder umströmt. Alternativ oder zusätzlich ist der Formkörper in dem Strömungsfeld angeordnet. Dabei ist das Strömungsfeld derart in der Halbzelle ausgebildet ist, dass der Elektrolyt besonders vorteilhaft an beziehungsweise in und/oder durch die Elektrode strömen kann, was durch den wenigstens einen Formkörper gefördert beziehungsweise begünstigt werden kann. Zusätzlich oder alternativ ist der wenigstens eine Formkörper an dem Fluidausgang angeordnet, durch welchen der Elektrolyt die Halbzelle verlässt.

Durch die Anordnung des Formkörpers am Fluideingang beziehungsweise nach dem Fluideingang oder in dessen unmittelbarer Nähe kann das Elektrolyt bereits beim beziehungsweise kurz nach dem Eintreten beziehungsweise Einfließen in die Halbzelle zumindest teilweise verwirbelt werden, sodass in dem Elektrolytstrom Turbulenzen beziehungsweise Pseudoturbulenzen auftreten, sodass beispielsweise der Elektrolyt besonders vorteilhaft an die Elektrode strömen kann. So können, insbesondere dann, wenn beispielsweise der Elektrolyt bereits aus einer anderen Zelle in die Zelle gefördert wird, Diffusionsverluste besonders gering gehalten werden, da eine Verteilung der Ionen im Elektrolyten durch die Anordnung des wenigstens einen Formkörpers am Fluideingang homogenisiert wird. Durch eine Anordnung des wenigstens einen Formkörpers innerhalb des Strömungsfeldes kann beispielsweise erreicht werden, dass unterschiedliche Teilbereiche der Elektrode jeweils von einem Elektrolyten angeströmt beziehungsweise durchströmt werden, in welchem beispielsweise die Ionenverteilung besonders homogen ist. So kann beispielsweise je nach Ausdehnung der Elektrode durch Anordnung des wenigstens einen Formkörpers im Strömungsfeld der Elektrolyt über die gesamte Ausdehnung der Elektrode besonders homogen gehalten werden. Durch die Anordnung des wenigstens einen Formkörpers vor dem Fluidausgang beziehungsweise an dem Fluidausgang kann der bereits an der Elektrode vorbei geflossene Elektrolyt wieder homogenisiert werden, sodass dieser, falls nach der Zelle eine weitere Zelle angeordnet ist, möglichst homogen in die weitere Zelle einfließen beziehungsweise einströmen kann. Durch die genannten Möglichkeiten der Anordnung des wenigstens einen Formkörpers in der Halbzelle kann die Verwirbelung derart beeinflusst werden, dass Verluste in der Redox-Flussbatterie besonders gering gehalten werden können.

In vorteilhafter Ausgestaltung der Erfindung ist der wenigstens eine Formkörper an der Membran angeordnet. Mit anderen Worten ist die Membran mit einer, insbesondere dreidimensionalen, Struktur versehen, welche Verwirbelungen des Elektrolyten insbesondere in der Nähe der Membran erzeugen kann. Dabei kann der Formkörper aus demselben Werkstoff wie die Membran oder aus einem Werkstoff, der unterschiedlich des Werkstoffs der Membran ist, gebildet sein. Dadurch kann in besonders vorteilhafter Weise eine Verwirbelung des Elektrolyten in der jeweiligen Halbzelle an der Stelle stattfinden, an der der Ionenaustausch zwischen beiden Zellen stattfindet. Dadurch können Verluste in der Redox-Flussbatterie besonders gering gehalten werden.

In vorteilhafter Ausgestaltung der Erfindung ist das Elektrolyt über eine erste Rohrleitung an dem Fluideingang und/oder über den Fluidausgang in eine zweite Rohrleitung förderbar. Erfindungsgemäß ist nun vorgesehen, dass wenigstens eine der Rohrleitungen eine Verjüngung und/oder Verbreiterung aufweist, welche als zumindest Teil der Verwirbelungsvorrichtung den Elektrolyten verwirbelt. Mit anderen Worten ist wenigstens eine der Rohrleitungen derart ausgebildet, dass der Querschnitt der Rohrleitung in zumindest einem Teilbereich im Gegensatz zu dem Querschnitt der restlichen Rohrleitung größer beziehungsweise kleiner ist. Die unterschiedlichen Querschnittsflächen entlang der Rohrleitung führen zu einer Druckänderung des durch die Rohrleitung strömenden beziehungsweise geförderten Elektrolyten. Dadurch kann zumindest in einem an den Teilbereich der Querschnittsflächenänderung angrenzenden Stück der Rohrleitung und/oder der Halbzelle eine Verwirbelungszone im Elektrolytstrom ausgebildet werden. Somit kann durch die Verjüngung und/oder Verbreiterung in wenigstens einem Teilbereich in wenigstens einer der Rohrleitungen auf besonders einfache und störunanfällige Weise der Elektrolytstrom verwirbelt werden.

In besonders vorteilhafter Weise ist der Fluidausgang einer der Halbzellen der Zelle beziehungsweise einer ersten Zelle mit dem Fluideingang einer der Halbzelle einer zweiten Zelle verbunden. Dabei ist die Verbindung insbesondere mittels einer der Rohrleitungen, insbesondere fluidisch leitend, ausgebildet. Die Verwirbelungsvorrichtung ist nun erfindungsgemäß derart ausgebildet, dass der Elektrolyt nach der ersten Zelle und vor der zweiten Zelle verwirbelbar ist. Das heißt, über die Verbindung des Fluidausgangs mit dem Fluideingang der nächsten Zelle kann der Elektrolytstrom verwirbelt werden. Sind mehrere Zellen zu dem Stack zusammengefasst, so kann nun der gesamte Stack, das heißt die jeweils einzelnen Zellen innerhalb des Stacks, jeweils mit einem besonders homogenen Elektrolytstrom beziehungsweise Elektrolyten versorgt beziehungsweise durchströmt werden. Dadurch lassen sich auf besonders einfache und/oder kostengünstige Weise mehrere Zellen zu einem Stack einer Redox-Flussbatterie zusammenfassen, innerhalb welchem insbesondere Diffusionsverluste besonders gering gehalten werden können.

In vorteilhafter Ausgestaltung der Erfindung ist die Verwirbelungsvorrichtung derart ausgebildet, dass durch die Verwirbelungsvorrichtung wenigstens eine Unterbrechung in der Elektrode ausgebildet ist, welche die Elektrode insbesondere bis zu 2 Zentimetern unterbricht. Mit anderen Worten ist die Elektrode, welche insbesondere aus einem Vlies ausgebildet sein kann, insbesondere entlang der Strömungsrichtung des Elektrolyten, in wenigstens einem Teilbereich unterbrochen. Das heißt, in diesem Teilbereich der Unterbrechung ist der Werkstoff der Elektrode ausgespart. Dabei kann die Unterbrechung die Elektrode, insbesondere quer zur Strömungsrichtung des Elektrolyten, beispielweise vollständig unterbrechen. Dabei kann die Unterbrechung, insbesondere in Strömungsrichtung, bis zu 2 Zentimeter, vorteilhafterweise bis zu 1 Zentimeter betragen. Tritt der Elektrolyt in den Teilbereich der Unterbrechung ein, kann der Elektrolyt dabei verwirbelt werden. Bereits nach einer kurzen Wegstrecke durch die Unterbrechung, beispielweise von einem beziehungsweise zwei Zentimetern, kann der Elektrolyt derart verwirbelt sein, dass er, insbesondere homogenisiert, in einen weiteren Teilbereich der Elektrode beziehungsweise durch diesen strömen kann. Somit kann in besonders vorteilhafter Weise die Strömung derart beeinflusst werden, dass der Elektrolyt nicht nur laminar durch die Elektrode strömt. Da bei der laminaren Strömung weniger Edukte des Elektrolyten umgesetzt würden, kann die Redox-Flussbatterie somit besonders verlustarm betrieben werden.

In vorteilhafter Ausgestaltung der Erfindung beträgt ein durch die Verwirbelung des Elektrolyten mittels der Verwirbelungsvorrichtung bewirkter Druckabfall im Elektrolyten, insbesondere in der Verwirbelungszone, bis zu 20 Prozent des Drucks des Elektrolyten vor der Verwirbelung durch die Verwirbelungsvorrichtung. Durch die Vorgabe eines Werts, innerhalb welchem ein Druckabfall durch die Verwirbelungsvorrichtung erzeugt wird, kann gewährleistet werden, dass kein zu großer Druckabfall durch die Verwirbelungsvorrichtung verursacht wird. Dadurch können Strömungsverluste besonders gering gehalten werden, wodurch die Redox-Flussbatterie besonders vorteilhaft betrieben werden kann.

Ein zweiter Aspekt der Erfindung betrifft ein Verfahren zum Betreiben einer Redox-Flussbatterie, welche wenigstens eine Zelle umfasst, welche durch eine Membran in Halbzellen unterteilt ist. Jede der Halbzellen umfasst jeweils eine Elektrode, welche in einem von einem Elektrolyten durchströmbaren Innenraum der jeweiligen Halbzelle angeordnet ist. Der Elektrolyt wird mittels einer Pumpvorrichtung in dem erfindungsgemäßen Verfahren über einen Fluideingang in einem Strömungsfeld durch die Halbzelle zu einem Fluidausgang gefördert. Um nun die Redox-Flussbatterie mittels des erfindungsgemäßen Verfahrens besonders vorteilhaft betreiben zu können, sodass Verluste, insbesondere Diffusionsverluste, besonders gering gehalten werden können, ist es erfindungsgemäß vorgesehen, dass mittels einer Verwirbelungsvorrichtung eine Strömung des Elektrolyten verwirbelt wird.

In vorteilhafter Ausgestaltung der Erfindung steuert und/oder regelt die Verwirbelungsvorrichtung die Pumpvorrichtung derart, dass der Elektrolyt gepulst gefördert wird und die gepulste Förderung den Elektrolyten zumindest teilweise verwirbelt. Mit anderen Worten wird ein Durchfluss des Elektrolyten durch die Halbzelle derart reguliert, dass durch die Pulsung eine ansonsten weitestgehend laminare Strömung zumindest teilweise zu einer diffusen beziehungsweise turbulenten Strömung wird. Dabei wir die Pumpvorrichtung beispielwiese nur innerhalb eines ersten Zeitintervalls eingeschaltet und im Anschluss an das erste Zeitintervall für ein zweites Zeitintervall abgeschaltet. Dabei erfolgen Abschalten und Anschalten im stetigen Wechsel und die Zeitintervalle sind so gewählt, dass der Elektrolyt besonders vorteilhaft verwirbelt wird. Durch die Steuerung beziehungsweise Regelung der Pumpvorrichtung kann darüber hinaus der Durchfluss beziehungsweise ein Volumenstrom dahingehend reguliert werden, dass, für den Fall von hohen beziehungsweise niedrigen Umsatzraten des Elektrolyten in der Zelle, mehr oder weniger Elektrolyt durch die Zelle strömt. Dabei auftretende Verluste durch beziehungsweise in der Pumpleitung können in Kauf genommen werden, da die Zelle beziehungsweise die Redox-Flussbatterie insgesamt verlustärmer betrieben werden kann.

In vorteilhafter Ausgestaltung der Erfindung umfasst die Verwirbelungsvorrichtung eine Ultraschallvorrichtung, mittels welcher zumindest ein Teil des Elektrolyten mit Ultraschall beaufschlagt und somit verwirbelt wird. Das heißt, dass durch die Ultraschallvorrichtung Ultraschall beispielsweise durch Schwingung auf beziehungsweise in den Elektrolyten übertragbar ist beziehungsweise übertragen wird, sodass sich in diesem Ultraschallwellen ausbreiten können. Diese führen vorteilhafterweise zumindest in Teilbereichen zu einer Verwirbelung des Elektrolyten, das heißt in dem Elektrolyt können zusätzlich zu einer laminaren Strömung turbulente beziehungsweise pseudoturbulente Teilbereiche im Strömungsfluss ausgebildet werden. Dadurch können insbesondere Diffusionsverluste in der Redox-Flussbatterie besonders gering gehalten werden. Ein weiterer Vorteil der Ultraschallvorrichtung beziehungsweise des Beaufschlagens des Elektrolyten mit Ultraschall ist, dass zusätzlich eine Reinigungswirkung auftreten kann, da beispielsweise Ablagerungen im Vlies der Elektrode verringert werden können beziehungsweise ein Entstehen von Ablagerungen eingeschränkt werden kann.

Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ausführungsbeispiele der Erfindung werden nachfolgend anhand schematischer Zeichnungen näher erläutert. Es zeigt:
- FIG 1: schematische Darstellung einer erfindungsgemäßen Redox-Flussbatterie mit Verwirbelungsvorrichtung;
- FIG 2: schematische Darstellung einer Elektrode der Redox-Flussbatterie mit Unterbrechungen; und
- FIG 3: schematische Darstellung der Redox-Flussbatterie mit drei hintereinander geschalteten Zellen.

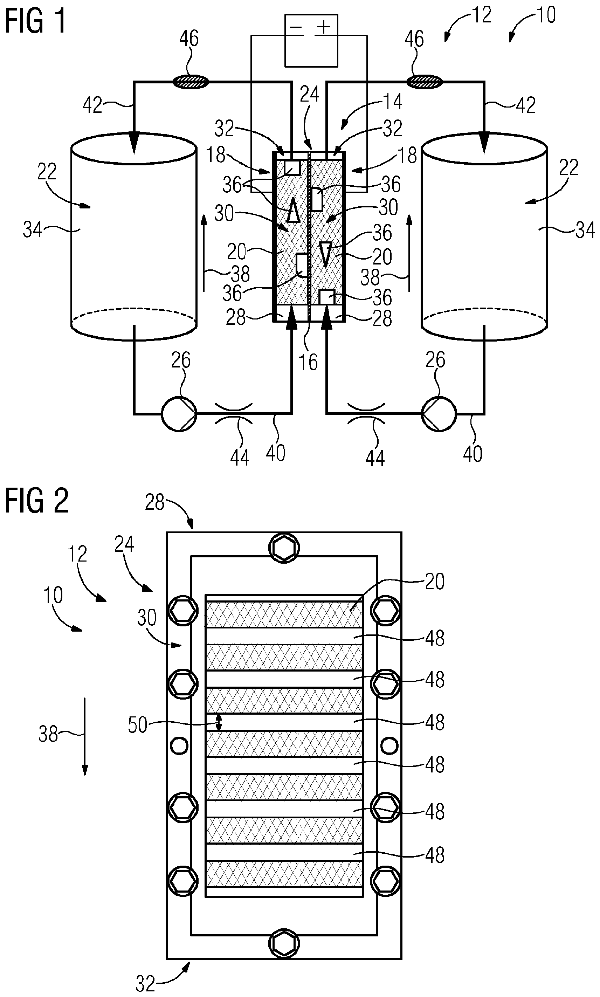

FIG 1 zeigt eine schematische Darstellung einer erfindungsgemäßen Redox-Flussbatterie 10 mit Verwirbelungsvorrichtung 12, wobei die Redox-Flussbatterie 10 wenigstens eine Zelle 14 umfasst. Die Zelle 14 ist durch eine Membran 16 in Halbzellen 18 unterteilt, welche jeweils eine Elektrode 20 umfasst. Dabei ist die jeweilige Elektrode 20 in einem von einem Elektrolyten 22 durchströmbaren Innenraum 24 der jeweiligen Halbzelle 18 angeordnet. Das Elektrolyt 22 kann mittels einer Pumpvorrichtung 26 über einen jeweiligen Fluideingang 28 in einem Strömungsfeld 30 durch die Halbzelle 18 zu einem Fluidausgang 32 gefördert werden beziehungsweise ist förderbar.

Die Redox-Flussbatterie 10 weist Tanks 34 auf, in welchen jeweils der Elektrolyt 22 für eine Halbzelle 18 vorhaltbar ist. Mittels der Pumpvorrichtung 26 kann der jeweilige Elektrolyt 22 über eine Leitung 36 in die jeweilige Halbzelle 22 gefördert werden. Der Elektrolyt 22 wird durch den jeweiligen Innenraum 24 der Zelle 14 gefördert und strömt dabei durch beziehungsweise an der Elektrode 20 vorbei. Dabei ist der Elektrolyt 22 in einer der Halbzellen 18 beispielsweise positiv und in der anderen Halbzelle 18 beispielsweise negativ geladen, sodass es über die Membran 16, welche insbesondere eine Ionenaustauschmembran ist, zu einem Ladungsträgeraustausch kommen kann, wodurch Strom beispielsweise für einen Verbraucher abgegriffen werden kann. Der Elektrolyt 22 wird anschließend über den jeweiligen Fluidausgang 32 wieder zu dem jeweiligen Tank 34 gefördert.

Bei dem Betrieb einer Redox-Flussbatterie 10 kann es zu Verlusten kommen, welche beispielsweise die elektrische Effizienz beziehungsweise Spannung herabsetzen könnten. So können diese Verluste an unterschiedlichen Stellen der Redox-Flussbatterie 10 auftreten und unterschiedliche Ursachen haben. Beispielsweise können hohe elektrische beziehungsweise ionische Widerstände oder eine eingeschränkte Reaktionskinetik oder hohe Diffusionswiderstände auftreten. Zusätzlich kann es zu konzentrationsabhängigen Verlusten unter anderem in dem Volumenfluss des Elektrolyten 26 kommen.

Um nun die Redox-Flussbatterie 10 besonders vorteilhaft und verlustarm betreiben zu können, ist die Verwirbelungsvorrichtung 12 derart ausgebildet, dass mittels der Verwirbelungsvorrichtung 12 die Strömung des Elektrolyten 22 verwirbelbar ist. Dazu kann die Redox-Flussbatterie 10 mittels eines Verfahrens zum Betreiben der Redox-Flussbatterie 10 betrieben werden, sodass mittels der Verwirbelungsvorrichtung 12 eine Strömung des Elektrolyten 22 verwirbelt wird.

Vorteilhafterweise umfasst die Verwirbelungsvorrichtung 12 wenigstens einen Formkörper 36, welcher als Rampe und/oder Körper mit wenigstens einer Kante ausgebildet ist. Dabei ist der wenigstens eine Formkörper 36 vorteilhafterweise in Strömungsrichtung 38 des Elektrolyten 22 gesehen nach dem Fluideingang 28 und/oder vor dem Fluidausgang 32 und/oder innerhalb des Strömungsfeldes 30 angeordnet. Als die Strömungsrichtung 38 kann die Hauptströmungsrichtung des Elektrolyten 22 angesehen werden, welche in der Regel von dem Fluideingang 28 zu dem Fluidausgang 32 hin orientiert ist. Zusätzlich oder alternativ ist der wenigstens eine Formkörper 36 an der Membran 16 angeordnet.

Vorteilhafterweise wird der Elektrolyt 22 über eine erste Rohrleitung 40 an den Fluideingang 28 gefördert. Zusätzlich oder alternativ wird das Elektrolyt 22 über den Fluidausgang 32 in eine zweite Rohrleitung 42 gefördert beziehungsweise ist das Elektrolyt 22 in die Rohrleitung 42 förderbar. Um das Elektrolyt 22 besonders vorteilhaft verwirbeln zu können, um Verluste zu vermeiden, ist zumindest ein Teil der Verwirbelungsvorrichtung 12 als Verjüngung 44 und/oder Verbreiterung 46 wenigstens einer der Rohrleitungen 40 und/oder 42 ausgebildet.

Vorteilhafterweise wird mittels der Verwirbelungsvorrichtung 12 die Verwirbelung des Elektrolyten 22 derart bewirkt, dass ein in dem Elektrolyten 22 verursachter Druckabfall bis zu 20 Prozent des Drucks des Elektrolyten 22 vor der Verwirbelung beträgt. Somit ist die wenigstens eine Verwirbelungszonen, innerhalb welcher sich das Elektrolyt 22 im Vergleich zum Elektrolyten 22 außerhalb der Verwirbelungszone derart verhält, dass eine Strömung zumindest teilweise turbulent beziehungsweise pseudoturbulent ist, so ausgebildet, dass die Verwirbelung nicht zu stark wird, sodass Strömungsverluste besonders gering gehalten werden können. Strömungsverluste können durch ein Abreißen der Strömung des Elektrolyten 22 auftreten. Ferner ist die Verwirbelung in der Verwirbelungszone so ausgebildet, dass jedoch beispielsweise eine besonders gute Homogenisierung des Elektrolyten 22 stattfinden kann.

So kann mit der in FIG 1 gezeigten Redox-Flussbatterie 10 beispielsweise der Elektrolyt 22 besonders homogenisiert, das heißt in dem Elektrolyten 22 sind die Ionen insbesondere gleich verteilt, an eine jeweilige Dreiphasengrenze innerhalb der Zelle 14 an- oder abtransportiert beziehungsweise gefördert werden. Darüber hinaus können mit der gezeigten Redox-Flussbatterie 10 beispielsweise besonders reaktive Elektrolyten 22, wie beispielsweise Polyoxometallate -Elektrolyten, welche eine Chemie mit besonders hoher Reaktionskinetik aufweisen, verwendet werden. Dadurch kann die Redox-Flussbatterie 10 besonders effizient betreibbar sein beziehungsweise betrieben werden. Im Vergleich zu konventionellen Redox-Flussbatterien, in welchen in einem Strömungsfeld oder in den Leitungen eine Reynolds-Zahl kleiner 1000 auftritt, können in der gezeigten Redox-Flussbatterie 10 insbesondere im jeweiligen Strömungsfeld 30 Reynolds-Zahlen von bis zu 2300 erreicht werden, wie Experimente gezeigt haben.

FIG 2 zeigt eine schematische Darstellung der Elektrode 20 der Redox-Flussbatterie 10 mit Unterbrechungen 48. Vorteilhafterweise wird durch die Verwirbelungsvorrichtung 12 wenigstens eine Unterbrechung 48 in der Elektrode ausgebildet, welche die Elektrode 20 insbesondere bis zu 2 Zentimeter unterbricht. Das heißt, eine Länge 50 der Unterbrechung 48 kann, insbesondere in Strömungsrichtung 38, bis zu 2 Zentimeter lang sein und die Elektrode 20 insbesondere vollständig unterbrechen. Das heißt, der Werkstoff, aus dem die Elektrode 20 ausgebildet ist, insbesondere beispielsweise ein kohlenstoffbasiertes Vlies, ist in den Bereichen der Unterbrechungen 48 ausgespart, sodass das Elektrolyt 22 innerhalb der Elektrode 20 mehrmals aus dem Vlies austritt und dabei verwirbelt wird, um nach Zurücklegen der Länge 50 wieder, insbesondere homogenisiert, in das Vlies einzutreten, wodurch Diffusionsverluste besonders gering gehalten werden können.

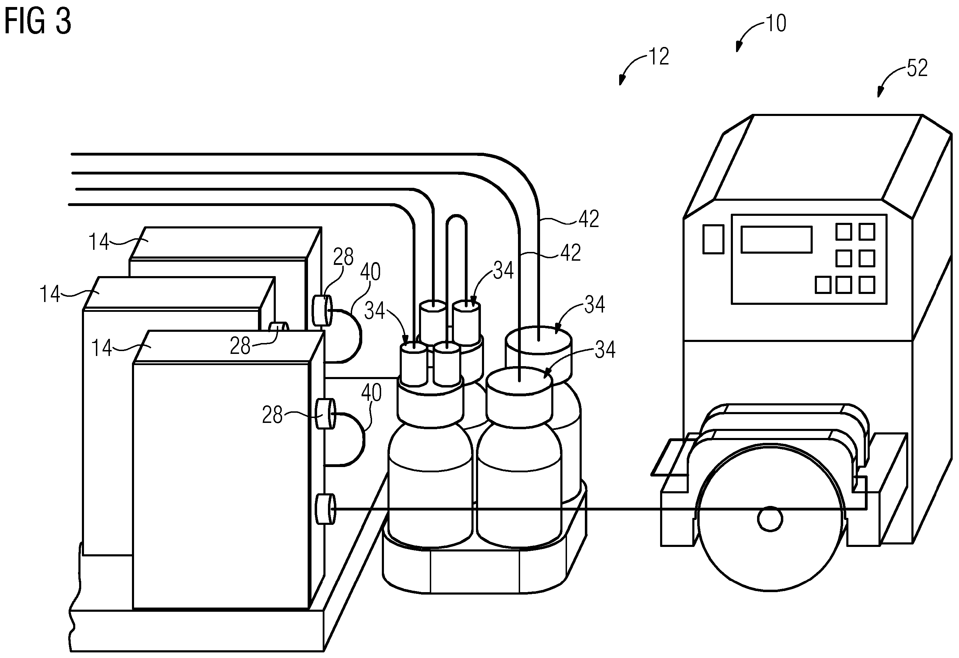

FIG 3 zeigt eine schematische Darstellung der Redox-Flussbatterie 10 mit drei hintereinander geschalteten Zellen 14. So ist bei der Redox-Flussbatterie 10, falls bei dieser mehrere Zellen 14 zu einem Stack zusammengeschaltet sind, mittels welchem beispielsweise die elektrische Spannung der Redox-Flussbatterie 10 erhöht werden kann, vorteilhafterweise der Fluidausgang 32 einer Halbzelle 18 einer ersten der Zellen 14 mit dem Fluideingang 28 einer Halbzelle einer zweiten der Zellen 14, insbesondere mittels einer der Rohrleitungen 40 beziehungsweise 42, verbunden. Die Verwirbelungsvorrichtung 12 ist nun derart ausgebildet, dass der Elektrolyt 22 nach der ersten Zelle 14 und vor der zweiten Zelle 14 verwirbelbar ist beziehungsweise verwirbelt wird. Dadurch kann der Elektrolyt 22 jede der Zellen 14, welche es nacheinander durchströmt, jeweils möglichst homogenisiert durchströmen.

Als ebenfalls vorteilhaft hat sich gezeigt, dass die Verwirbelungsvorrichtung 12 die Pumpvorrichtung 26 derart steuert und/oder regelt, dass der Elektrolyt 22 gepulst gefördert wird. Dabei wird durch die gepulste Förderung der Elektrolyt 22 zumindest teilweise verwirbelt. Das heißt, die Pumpvorrichtung 26 wird nicht kontinuierlich betrieben, sodass der Elektrolyt 22 in einem Zeitintervall stetig und ohne Unterbrechung in die jeweilige Zelle 14 gefördert wird, sondern es wird die Förderung in dem Zeitintervall mehrmals unterbrochen und die Pumpvorrichtung 26 fördert den Elektrolyten 22 nur in einem zweiten, sich wiederholenden Zeitintervall, welches kleiner als das Zeitintervall ist. Durch das jeweils zu Beginn der erneuten Förderung für das zweite Zeitintervall bedingte Anfahren der Pumpvorrichtung 26 und das Abschalten derselben und dem dadurch verursachten Abreißen beziehungsweise Teilabreißen der Strömung des Elektrolyten 22 kann eine Verwirbelung in dem Elektrolyten 22 initiiert werden.

Vorteilhafterweise kann die Verwirbelungsvorrichtung 12 der Redox-Flussbatterie 10 eine Ultraschallvorrichtung 52 umfassen. Mittels der Ultraschallvorrichtung 52 kann zumindest ein Teil des Elektrolyten 22 mit Ultraschall beaufschlagt werden, das heißt in dem Elektrolyten 22 kann mittels der Ultraschallvorrichtung 52 wenigstens eine Ultraschallwelle eingeleitet werden, sodass in dem Elektrolyten 22 mittels Ultraschall zumindest in einem Teilbereich, einer sogenannten Verwirbelungszonen, eine Verwirbelung des Elektrolyten 22 stattfinden. Zusätzlich kann durch die Ultraschallvorrichtung 52 eine Ablagerung beispielsweise wenigstens eines Inhaltsstoffs des Elektrolyten 22 insbesondere an der Elektrode 20 verringert beziehungsweise vermieden werden. Auch können bereits vorhandene Ablagerungen gegebenenfalls mittels des durch den Ultraschall beaufschlagten Elektrolyten 22 abgebaut werden.

Mittels der gezeigten Ausführungsformen der Redox-Flussbatterie 10 und der Verwirbelungsvorrichtung 12 kann die Redox-Flussbatterie 10 besonders vorteilhaft betrieben werden, da insbesondere Diffusionsprozesse besonders gering gehalten werden können. Dies gilt ebenso für das Verfahren zum Betreiben der Redox-Flussbatterie 10.

## Patentansprüche

1. Redox-Flussbatterie (10) mit wenigstens einer Zelle (14), welche durch eine Membran (16) in Halbzellen (18) unterteilt ist, welche jeweils eine Elektrode (20) umfasst, welche in einem von einem Elektrolyt (22) durchströmbaren Innenraum (24) der jeweiligen Halbzelle (18) angeordnet ist und der Elektrolyt (22) mittels einer Pumpvorrichtung (26) über einen Fluideingang (28) in einem Strömungsfeld (30) durch die Halbzelle (18) zu einem Fluidausgang (32) förderbar ist,
wobei die Elektrode aus einem kohlenstoffbasierten Vlies ausgebildet ist und
eine Verwirbelungsvorrichtung (12) vorgesehen ist, mittels welcher die Strömung des Elektrolyten (22) verwirbelbar ist, **dadurch gekennzeichnet, dass** durch die Verwirbelungsvorrichtung (12) wenigstens eine Unterbrechung (48) in der Elektrode (20) ausgebildet ist, welche die Elektrode (20) bis zu 2 cm unterbricht.

2. Redox-Flussbatterie (10) nach Anspruch 1, **dadurch gekennzeichnet, dass** die Verwirbelungsvorrichtung (12) wenigstens einen Formkörper (36) umfasst, welche als Rampe und/oder Körper mit wenigstens einer Kante ausgebildet ist.

3. Redox-Flussbatterie (10) nach Anspruch 1 oder 2, **dadurch gekennzeichnet, dass** der wenigstens eine Formkörper (36) in Strömungsrichtung (38) des Elektrolyten (22) nach dem Fluideingang (28) und/oder vor dem Fluidausgang (32) und/oder innerhalb des Strömungsfeldes (30) angeordnet ist.

4. Redox-Flussbatterien (10) nach einem der vorhergehenden Ansprüche, **dadurch gekennzeichnet, dass** der wenigstens eine Formkörper (36) an der Membran (16) angeordnet ist.

5. Redox-Flussbatterien (10) nach einem der vorhergehenden Ansprüche, **dadurch gekennzeichnet, dass** der Elektrolyt (22) über eine erste Rohrleitung (40) an den Fluideingang (28) und/oder über den Fluidausgang (32) in eine zweite Rohrleitung (42) förderbar ist, und wenigstens eine der Rohrleitungen (40, 42) eine Verjüngung (44) und/oder Verbreiterung (46) aufweist, welche als zumindest Teil der Verwirbelungsvorrichtung (12) den Elektrolyten (22) verwirbelt.

6. Redox-Flussbatterien (10) nach einem der vorhergehenden Ansprüche, **dadurch gekennzeichnet, dass** der Fluidausgang (32) einer der Halbzellen (18) einer ersten Zelle (14) mit dem Fluideingang (28) einer Halbzelle (18) einer zweiten Zelle (14), insbesondre mittels einer der Rohrleitungen (40, 42), verbunden ist und die Verwirbelungsvorrichtung (12) derart ausgebildet ist, dass der Elektrolyt (22) nach der ersten Zelle (14) und vor der zweiten Zelle (14) verwirbelbar ist.

7. Redox-Flussbatterie (10) nach einem der vorhergehenden Ansprüche, **dadurch gekennzeichnet, dass** ein mittels der Verwirbelungsvorrichtung (12) bewirkte Verwirbelung des Elektrolyten (20) verursachter Druckabfall im Elektrolyt (20) bis zu 20 % des Drucks des Elektrolyten (20) vor der Verwirbelung beträgt.

8. Verfahren zum Betreiben einer Redox-Flussbatterie (10), welche wenigstens eine Zelle (14) umfasst, welche durch eine Membran (16) in Halbzellen (18) unterteilt ist, welche jeweils eine Elektrode (20) umfasst, welche in einem von einem Elektrolyt (22) durchströmbaren Innenraum (24) der jeweiligen Halbzelle (18) angeordnet ist und der Elektrolyt (22) mittels einer Pumpvorrichtung (26) über einen Fluideingang (28) in einem Strömungsfeld (30) durch die Halbzelle (18) zu einem Fluidausgang (32) gefördert wird, wobei die Elektrode aus einem kohlenstoffbasierten Vlies ausgebildet ist und wobei mittels einer Verwirbelungsvorrichtung (12) eine Strömung des Elektrolyten (22) verwirbelt wird, **dadurch gekennzeichnet, dass** durch die Verwirbelungsvorrichtung (12) wenigstens eine Unterbrechung (48) in der Elektrode (20) ausgebildet wird, welche die Elektrode (20) bis zu 2 cm unterbricht.

9. Verfahren nach Anspruch 8, **dadurch gekennzeichnet, dass** die Verwirbelungsvorrichtung (12) die Pumpvorrichtung (26) derart steuert und/oder regelt, sodass der Elektrolyt (22) gepulst gefördert wird und die gepulste Förderung den Elektrolyten (22) zumindest teilweise verwirbelt.

10. Verfahren nach Anspruch 8 oder 9, **dadurch gekennzeichnet, dass** die Verwirbelungsvorrichtung (12) eine Ultraschallvorrichtung (52) umfasst, mittels welcher zumindest ein Teil des Elektrolyten (22) mit Ultraschall beaufschlagt und somit verwirbelt wird.

## Claims

1. A redox flow battery (10) with at least one cell (14) which is divided into half-cells (18) by a membrane (16), each half-cell comprising an electrode (20) which is arranged in an interior space (24) of the respective half-cell (18) through which an electrolyte (22) flows, and the electrolyte (22) can be pumped by means of a pumping device (26) via a fluid inlet (28) in a flow field (30) through the half-cell (18) to a fluid outlet (32), wherein the electrode is formed from a carbon-based fleece and
a swirling device (12) is provided by means of which the flow of the electrolyte (22) can be swirled up, **characterized in that** the swirling device (12) forms at least one interruption (48) in the electrode (20) which interrupts the electrode (20) by up to 2 cm.

2. The redox flow battery (10) according to claim 1, **characterized in that** the swirling device (12) comprises at least one shaped body (36) which is formed as a ramp and/or a body with at least one edge.

3. The redox flow battery (10) according to claim 1 or 2, **characterized in that** the at least one shaped body (36) is arranged in the flow direction (38) of the electrolyte (22) downstream of the fluid inlet (28) and/or upstream of the fluid outlet (32) and/or within the flow field (30).

4. Redox flow batteries (10) according to any one of the preceding claims, **characterized in that** the at least one shaped body (36) is arranged on the membrane (16).

5. Redox flow batteries (10) according to one of the preceding claims, **characterized in that** the electrolyte (22) can be conveyed via a first pipe (40) to the fluid inlet (28) and/or via the fluid outlet (32) into a second pipe (42), and at least one of the pipes (40, 42) has a narrowing (44) and/or widening (46) which, as at least part of the swirling device (12), swirls the electrolyte (22).

6. Redox flow batteries (10) according to any one of the preceding claims, **characterized in that** the fluid outlet (32) of one of the half-cells (18) of a first cell (14) is connected to the fluid inlet (28) of a half-cell (18) of a second cell (14), in particular by means of one of the pipes (40, 42), and the swirling device (12) is configured such that the electrolyte (22) can be swirled up downstream of the first cell (14) and upstream of the second cell (14).

7. The redox flow battery (10) according to any one of the preceding claims, **characterized in that** a pressure drop in the electrolyte (20) caused by swirling of the electrolyte (20) by means of the swirling device (12) amounts to up to 20% of the pressure of the electrolyte (20) before turbulence.

8. A method for operating a redox flow battery (10) comprising at least one cell (14) which is subdivided into half-cells (18) by a membrane (16), each half-cell comprising an electrode (20) which is arranged in an interior space (24) of the respective half-cell (18) through which an electrolyte (22) flows, and the electrolyte (22) is supplied by means of a pumping device (26) via a fluid inlet (28) in a flow field (30) through the half-cell (18) to a fluid outlet (32), wherein the electrode is formed from a carbon-based fleece and wherein a flow of the electrolyte (22) is swirled up by means of a swirling device (12), **characterized in that** the swirling device (12) forms at least one interruption (48) in the electrode (20) which interrupts the electrode (20) by up to 2 cm.

9. The method according to claim 8, **characterized in that** the swirling device (12) controls and/or regulates the pump device (26) such that the electrolyte (22) is pulsed and the pulsed demand at least partially swirls up the electrolyte (22).

10. The method according to claim 8 or 9, **characterized in that** the swirling device (12) comprises an ultrasonic device (52) by means of which at least a portion of the electrolyte (22) is subjected to ultrasound and thus swirls up.

## Revendications

1. Batterie à flux redox (10) comprenant au moins une cellule (14), qui est divisée en demi-cellules (18) par une membrane (16), lesquelles comprennent chacune une électrode (20), qui est disposée dans un espace intérieur (24) de la demi-cellule (18) respective pouvant être traversé par un électrolyte (22), et l'électrolyte (22) peut être transporté au moyen d'un dispositif de pompage (26) par une entrée de fluide (28) dans un champ d'écoulement (30) à travers la demi-cellule (18) vers une sortie de fluide (32),
dans laquelle l'électrode est réalisée à partir d'un non-tissé à base de carbone et
un dispositif de tourbillonnement (12) est prévu, au moyen duquel l'écoulement de l'électrolyte (22) peut être amené à tourbillonner, **caractérisée en ce qu'**au moins une interruption (48) dans l'électrode (20) est réalisée par le dispositif de tourbillonnement (12), qui interrompt l'électrode (20) jusqu'à 2 cm.

2. Batterie redox (10) selon la revendication 1, **caractérisée en ce que** le dispositif de tourbillonnement (12) comprend au moins un corps moulé (36) qui est réalisé en tant que rampe et/ou corps avec au moins un bord.

3. Batterie redox (10) selon la revendication 1 ou 2, **caractérisée en ce que** l'au moins un corps moulé (36) est disposé dans la direction d'écoulement (38) de l'électrolyte (22) après l'entrée de fluide (28) et/ou avant la sortie de fluide (32) et/ou à l'intérieur du champ d'écoulement (30).

4. Batteries redox (10) selon l'une des revendications précédentes, **caractérisées en ce que** l'au moins un corps moulé (36) est disposé sur la membrane (16).

5. Batteries redox (10) selon l'une des revendications précédentes, **caractérisées en ce que** l'électrolyte (22) peut être transporté par une première conduite (40) à l'entrée de fluide (28) et/ou par la sortie de fluide (32) dans une seconde conduite (42), et au moins l'une des conduites (40, 42) présente un rétrécissement (44) et/ou élargissement (46) qui, en tant qu'une partie au moins du dispositif de tourbillonnement (12), fait tourbillonner l'électrolyte (22).

6. Batteries redox (10) selon l'une des revendications précédentes, **caractérisées en ce que** la sortie de fluide (32) de l'une des demi-cellules (18) d'une première cellule (14) est reliée à l'entrée de fluide (28) d'une demi-cellule (18) d'une seconde cellule (14), en particulier au moyen de l'une des conduites (40, 42), et le dispositif de tourbillonnement (12) est réalisé de telle sorte que l'électrolyte (22) puisse être amené à tourbillonner après la première cellule (14) et avant la seconde cellule (14).

7. Batterie redox (10) selon l'une des revendications précédentes, **caractérisée en ce qu'**une chute de pression dans l'électrolyte (20) provoquée tourbillonnement de l'électrolyte (20) causé au moyen du dispositif de tourbillonnement (12) atteint jusqu'à 20 % de la pression de l'électrolyte (20) avant le tourbillonnement.

8. Procédé de fonctionnement d'une batterie redox (10) qui comprend au moins une cellule (14), qui est divisée en demi-cellules (18) par une membrane (16), qui comprennent chacune une électrode (20) respective, qui est disposée dans un espace intérieur (24) de la demi-cellule (18) respective pouvant être traversé par un électrolyte (22), et l'électrolyte (22) est transporté vers une sortie de fluide (32) au moyen d'un dispositif de pompage (26) par une entrée de fluide (28) dans un champ d'écoulement (30) à travers la demi-cellule (18), dans lequel l'électrode est réalisée à partir d'un non-tissé à base de carbone et dans lequel un écoulement de l'électrolyte (22) est amené à tourbillonner au moyen d'un dispositif de tourbillonnement (12), **caractérisé en ce qu'**au moins une interruption (48) est réalisée dans l'électrode (20) par le dispositif de tourbillonnement (12), qui interrompt l'électrode (20) jusqu'à 2 cm.

9. Procédé selon la revendication 8, **caractérisé en ce que** le dispositif d'agitation (12) commande et/ou régule le dispositif de pompage (26) de telle sorte que l'électrolyte (22) soit transporté par impulsions et que le transport par impulsions fasse tourbillonner l'électrolyte (22) au moins partiellement.

10. Procédé selon la revendication 8 ou 9, **caractérisé en ce que** le dispositif de tourbillonnement (12) comprend un dispositif à ultrasons (52) au moyen duquel au moins une partie de l'électrolyte (22) est soumise à des ultrasons et est ainsi amenée à tourbillonner.
